# FASCICULE DE BREVET EUROPEEN

(11) **EP 3 849 876 B1**
(45) Date de publication et mention de la délivrance du brevet: **24.08.2022**
(21) Numéro de dépôt: 19778575.1
(22) Date de dépôt: 29.08.2019
(51) Int. Cl.: B62D 1/187, B60R 13/02

(54) **ENSEMBLE FORMANT UNE GAINE D'HABILLAGE DE COLONNE DE DIRECTION ET VEHICULE PRESENTANT UNE TELLE GAINE**
ANORDNUNG ZUR BILDUNG EINES VERKLEIDUNGSGEHÄUSES FÜR EINE LENKSÄULE UND FAHRZEUG MIT EINEM SOLCHEN GEHÄUSE
ASSEMBLY FORMING A TRIM CASING FOR A STEERING COLUMN AND VEHICLE HAVING SUCH A CASING

(30) Priorité: 11.09.2018 FR 1858116
(43) Date de publication de la demande: 21.07.2021
(73) Titulaire: PSA Automobiles SA, 78300 Poissy (FR)
(72) Inventeur: HUCHE, Thierry, 78113 CONDE SUR VESGRE (FR)
(86) Numéro de dépôt international: PCT/FR2019/051989
(87) Numéro de publication internationale: WO 2020/053500

(56) Documents cités:
- EP-A1- 1 207 094
- EP-A1- 3 100 932
- EP-A2- 1 400 432
- WO-A1-2011/144858
- FR-A1- 2 927 875
- FR-A1- 2 980 757
- FR-A1- 2 982 571
- FR-A1- 3 013 667
- JP-A- 2001 063 590
- JP-A- 2014 172 448

## Description

L'invention se situe dans le domaine des colonnes de direction, de véhicules automobiles. L'invention se rapporte plus particulièrement à un habillage de colonne de direction, également désigné par le terme « rideau de colonne de direction », disposé en partie supérieure de manière à masquer l'espace situé entre le volant et le tableau de bord du véhicule.

L'habillage en partie supérieure de la colonne de direction comprend souvent une portion déformable, au niveau de la demi-gaine supérieure. Celle-ci, d'une part, autorise un réglage du volant selon les différentes positions avancée ou reculée, et haute ou basse ; et d'autre part, elle ne gêne pas la collapsibilité (ou effondrement) de la colonne de direction en cas de choc frontal, en d'autres termes elle ne gêne pas l'avancée de ladite colonne en direction de la planche de bord.

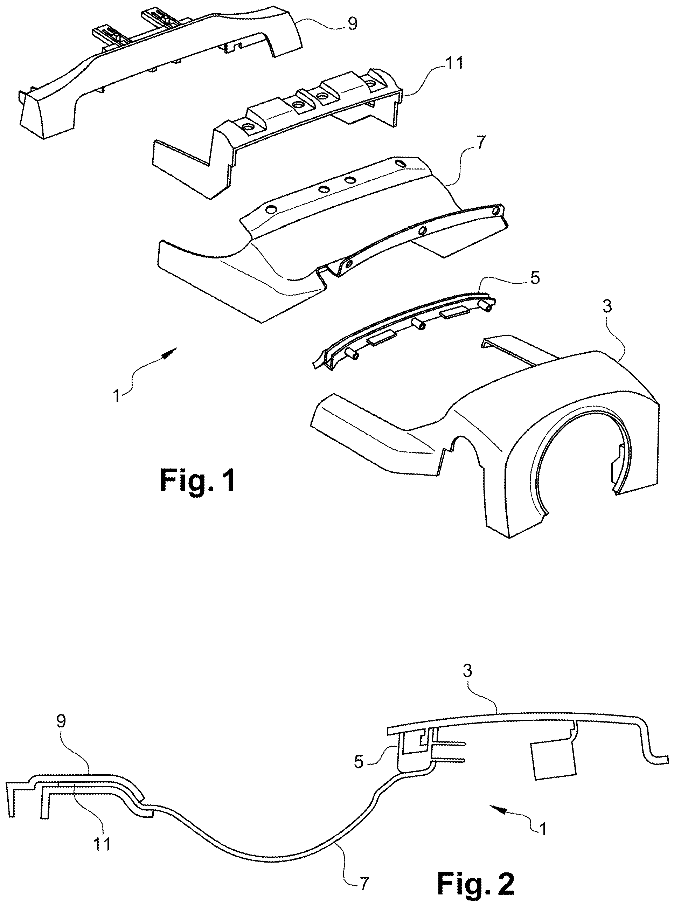

Malheureusement, ces portions déformables ne sont pas tout à fait satisfaisantes. D'une part, comme représenté par la vue éclatée de la figure 1 montrant un ensemble 1 formant une gaine d'habillage selon l'art antérieur, la mise en place de cette portion déformable nécessite l'assemblage de cinq pièces différentes. En effet, la portion déformable se présente généralement sous la forme d'un TEP souple 7 (TEP étant l'acronyme de Tissu Enduit Plastifié) relié par soudure sur la demi-gaine supérieure 3 par l'intermédiaire de la barrette 5 et sur la façade 9 par l'intermédiaire d'un raidisseur 11, ce qui rend son montage long et l'ensemble coûteux. La figure 2 montre une vue en coupe des différents éléments assemblés.

D'autre part, l'obtention d'une finition satisfaisante au niveau de cette zone n'est pas aisée, car des plis se forment au niveau du TEP, ce qui génère bien souvent l'ajout d'élastiques pour contenir tant bien que mal lesdits plis.

Pour pallier ce problème de génération de plis, le document FR2980757 propose un dispositif permettant d'éviter le mouvement générateur de plis d'un élément en tissu par rapport à un élément raidisseur. Le dispositif est constitué d'une pluralité de pointes ou « picots » disposés sur une surface du raidisseur. Les picots viennent créer une liaison entre l'élément en tissu et le raidisseur pour retenir l'élément en tissu et lui éviter de faire des plis ou des bourrelets lorsqu'il est en mouvement relatif par rapport au raidisseur. Si ce document permet de répondre à la problématique de la finition, il ne permet pas de réduire le nombre de pièces employées dans la gaine d'habillage.

C'est pourquoi d'autres gaines d'habillage ont été développées. Le document FR3013667 concerne une gaine de colonne de direction articulée selon la direction transversale du véhicule de manière à pouvoir se déplacer parallèlement à l'axe longitudinal du véhicule lorsque le volant de direction varie en position. Pour ce faire, la gaine comprend, par exemple, deux volets, l'un en matériau rigide et l'autre en un matériau déformable. Cette solution est intéressante, mais peut être encore améliorée en matière de sécurité, c'est-à-dire sur les possibilités de collapsibilité offertes à la colonne de direction.

Le document EP3100932 propose des appareils de recouvrement d'intervalles de garniture intérieure pour des véhicules automobiles et des procédés de fabrication de dispositifs de recouvrement d'intervalle de garniture intérieure. Dans un exemple, un appareil de recouvrement de l'espace de garnissage intérieur comprend un premier élément de recouvrement de jeu. Le premier élément de cache d'écart comprend une pièce comportant un bord avant et un bord arrière et une pluralité d'ouvertures s'étendant entre les bords avant et arrière pour faciliter la déformation de la pièce en réponse à une force appliquée. Un revêtement souple recouvre la pièce.

Le document FR2982571 propose une pièce de garnissage destinée à recouvrir la partie mécanique d'une colonne de direction réglable d'un véhicule. La pièce de garnissage est constituée de deux parties distinctes, l'une est fabriquée en un matériau rigide et l'autre est fabriquée en un matériau souple apte à se déformer élastiquement sous un appui donné.

Le document EP1400432 concerne un élément de recouvrement flexible (ou couvercle) de l'espace situé entre la colonne de direction réglable d'un véhicule et le tableau de bord. Le couvercle comprend une partie supérieure et une partie inférieure. La partie supérieure comprend deux pièces chevauchantes fixées ensemble dans la région de chevauchement. Au moins une partie en traction est fixée dans cette zone de recouvrement au côté opposé de la partie supérieure au compartiment du véhicule. Le couvercle est fixé au boîtier de colonne de direction et au tableau de bord.

Les documents JP2001063590, FR2927875 et JP2014172448 décrivent chacun un agencement d'une garniture de colonne de direction comportant une demi gaine supérieure et une pièce de garniture fixée à la demi-gaine supérieure. Le document FR 2 927 875 A1 décrit un ensemble conforme au préambule de la revendication 1.

En dépit des différentes solutions proposées, un besoin existe toujours pour une gaine d'habillage avec un nombre diminué de pièces à assembler tout en garantissant une bonne finition de l'ensemble. Il est entendu qu'une telle solution de gaine d'habillage doit autoriser le réglage du volant de direction selon toutes ses positions et, pour des raisons de sécurité, ne pas gêner la collapsibilité de la colonne de direction.

A cet effet et selon un premier aspect, l'invention a pour objet un ensemble formant une gaine d'habillage de colonne de direction d'un véhicule automobile, l'ensemble comprenant une demi-gaine supérieure et une pièce de finition, l'ensemble étant remarquable en ce qu'il comprend en outre une pièce de garniture agencée pour s'étendre entre la demi-gaine supérieure et la pièce de finition, et configurée pour être reliée à la demi-gaine supérieure par des moyens de fixation fusibles, aptes à se rompre ou à se détacher sous l'application d'une force supérieure à un seuil donné. L'ensemble est destiné à être monté dans un véhicule comprenant un tableau de bord, la demi-gaine supérieure comprenant un bord avant et la pièce de garniture comprenant un bord avant et un bord arrière lorsque l'ensemble est assemblé et monté dans le véhicule, et la pièce de finition présente un logement montrant un profil en U ouvert en direction de l'arrière du véhicule et dans lequel le bord avant de la pièce de garniture est inséré, ou en ce que la pièce de finition se présente sous forme d'un cache colonne montrant un profil en L couché de manière à former avec le tableau de bord un logement en U dans lequel est inséré le bord avant de la pièce de garniture.

Comme on l'aura compris à la lecture de la définition qui vient d'en être donnée, l'invention consiste à rendre fusible la fixation entre la demi-gaine supérieure et la pièce de garniture destinée à masquer l'espace situé entre le volant et la planche de bord du véhicule. Cela permet de résoudre les problèmes de finition liés à l'emploi de matériaux souples sans pour autant altérer les prestations de la gaine en matière de sécurité. En effet, l'invention rend possible l'emploi de matériaux semi-rigides ou rigides pour la réalisation de la pièce de garniture, matériaux qui offrent une meilleure finition puisqu'ils ne risquent pas de former des plis, et améliorent donc la qualité perçue du véhicule. Le caractère fusible des moyens de fixation va permettre à la pièce de garniture de se détacher en cas de choc frontal lorsque la colonne avance en direction du tableau de bord.

Selon un mode de réalisation préféré, la pièce de garniture est rigide. De préférence, la pièce de garniture est constituée en un matériau comprenant une résine thermoplastique et/ou thermodurcissable.

De manière préférentielle, l'ensemble est remarquable en ce que le bord avant de la pièce de garniture est libre et/ou en ce que le bord arrière de la pièce de garniture est relié au bord avant de la demi-gaine supérieure. Le caractère libre du bord avant de la pièce de garniture lui offre une grande liberté de mouvement par rapport au tableau de bord et à la pièce de finition. Cette liberté de mouvement fait que la pièce de garniture va bouger en même temps que la demi-gaine supérieure lorsqu'elle est montée sur la colonne de direction et que le positionnement de ladite colonne de direction est ajusté par l'utilisateur du véhicule.

Idéalement, le logement en U destiné à recevoir le bord avant de la pièce de garniture comprenant un fond et des parois supérieure et inférieure, l'ensemble est remarquable en ce que le logement en U est dimensionné pour montrer un jeu entre ladite pièce de garniture et les parois inférieure et supérieure dudit logement, lorsqu'elle est insérée dans le logement ; et/ou un jeu entre le bord avant de la pièce de garniture et le fond du logement, lorsqu'elle est insérée dans le logement. Cette configuration est avantageuse en ce qu'elle offre une possibilité de mouvement du sous-ensemble formé par la demi-gaine supérieure et la pièce de garniture. Cette possibilité de mouvement se traduit par une possibilité de réglage de la position de la colonne de direction entre les positions avancée ou reculée, et entre les positions haute et basse.

De manière préférentielle, les moyens de fixation fusibles comprennent au moins un clip de fixation apte à se déclipper sous l'action d'une force supérieure à un seuil donné, et/ou au moins une attache montrant une zone sécable. Comme vu plus haut, l'emploi de moyens de fixation fusibles permet d'utiliser une pièce de garniture rigide sans pour autant gêner la collapsibilité de la colonne de direction.

Selon un mode de réalisation préféré de l'invention, la pièce de garniture comprend en outre une ancre pour la retenir à la demi-gaine supérieure et la demi-gaine supérieure comprend en outre un moyen d'ancrage destiné à coopérer avec ladite ancre.

Selon un deuxième aspect, l'invention a pour objet un véhicule automobile remarquable en ce qu'il comprend un ensemble formant une gaine d'habillage de colonne de direction selon le premier aspect, la colonne de direction comprenant en outre un volant de direction, la longueur de la pièce de garniture selon la directior longitudinale du véhicule étant inférieure à la distance entre le fond du logement en U et le volant de direction lorsque la colonne de direction est à son maximum d'avancement en direction du tableau de bord ; et/ou la demi-gaine supérieure montrant une face supérieure, la pièce de garniture est fixée sur la face supérieure de la demi-gaine supérieure. Ces configurations sont avantageuses pour la prestation de collapsibilité de la colonne.

Selon un troisième aspect, l'invention a pour objet un procédé de montage d'un ensemble formant une gaine d'habillage de colonne de direction selon le premier aspect, la demi-gaine supérieure montrant une face supérieure, le procédé étant remarquable en ce qu'il comprend les étapes suivantes :
- ancrage de la pièce de garniture sur la demi-gaine supérieure ; et
- fixation de la pièce de garniture sur la face supérieure de la demi-gaine supérieure, de préférence par clippage.

L'invention sera bien comprise et d'autres aspects et avantages apparaîtront clairement à la lecture de la définition qui suit donnée en référence aux planches de dessins annexées sur lesquelles :
- La figure 1 est une vue éclatée d'un ensemble formant une gaine d'habillage de colonne de direction selon l'art antérieur.
- La figure 2 est une vue en coupe de profil des pièces de l'ensemble illustré en figure 1 lorsqu'elles sont assemblées.
- La figure 3 est une vue éclatée d'un exemple de réalisation d'un ensemble formant une gaine d'habillage de colonne de direction selon l'invention.
- La figure 4 est une vue en coupe de profil des pièces de l'ensemble selon la position normale de la colonne de direction.
- La figure 5 est une vue en coupe de profil des pièces de l'ensemble selon la position maximale reculée et maximale haute de la colonne de direction.
- La figure 6 montre un exemple de réalisation d'une ancre selon l'invention.
- La figure 7 est une vue en coupe de profil illustrant l'ancrage de la pièce de garniture sur la demi-gaine supérieure.
- La figure 8 est une vue en coupe de profil illustrant la retenue par l'ancre de la pièce de garniture sur la demi-gaine supérieure en cas de choc frontal impliquant un décrochage ou une rupture des moyens de fixation.

Dans la description qui suit, le terme « comprendre » est synonyme de « inclure » et n'est pas limitatif en ce qu'il autorise la présence d'autres éléments dans le véhicule, ou l'ensemble formant une gaine d'habillage auquel il fait référence. Il est entendu que le terme « comprendre » inclut les termes « consister en ». Les termes « inférieur », « supérieur », « avant », « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction longitudinale et le terme « arrière » indiquera un positionnement orienté vers l'arrière d'un véhicule selon la même direction. Sur les différentes figures, les mêmes références désignent des éléments identiques ou similaires.

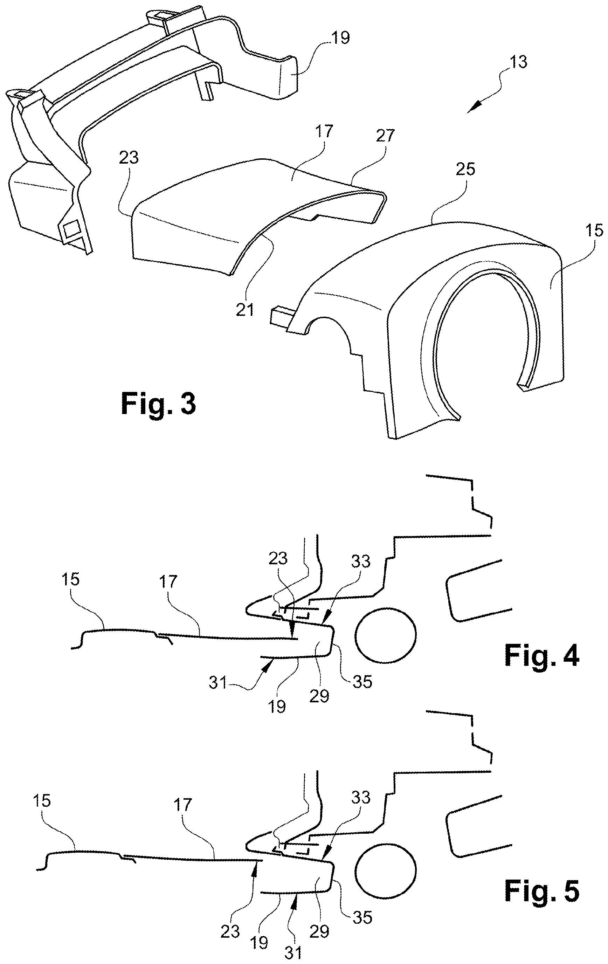

Les figures 1 et 2 ayant été commentées en partie introductive, on se réfèrera à présent à la figure 3 montrant en vue éclatée les différents éléments d'un ensemble 13 formant une gaine d'habillage selon l'invention. L'ensemble 13 comprend une demi-gaine supérieure 15, une pièce de garniture 17 et une pièce de finition 19. La pièce de garniture 17 est agencée pour s'étendre entre la demi-gaine supérieure 15 et la pièce de finition 19. Comme illustré en figure 3, la pièce de garniture 17 s'étend selon la direction longitudinale du véhicule de manière à présenter selon cette direction, un bord arrière 21 et un bord avant 23. La pièce de garniture 17 est reliée par son bord arrière 21 au bord avant 25 de la demi-gaine supérieure 15. Selon l'invention, les moyens de fixation 27 entre la demi-gaine supérieure 15 et la pièce de garniture 17 sont fusibles, en d'autres termes, ils sont aptes à se rompre ou à se détacher sous l'application d'une force supérieure à un seuil donné.

L'emploi de moyens de fixation 27 fusibles permet d'utiliser un matériau rigide ou semi-rigide pour la réalisation de la pièce de garniture 17. L'homme du métier aura avantage à employer un matériau rigide pour fabriquer la pièce de garniture 17, de manière à ce que le bord avant 23 de ladite pièce de garniture 17 puisse être libre, c'est-à-dire qu'il ne soit relié à aucune pièce et en particulier qu'il ne soit pas relié à la pièce de finition 19 pour assurer sa tenue.

Aussi, la pièce de garniture 17 selon l'invention peut être constituée du même matériau, ou d'un matériau similaire à celui constituant la demi-gaine supérieure 15 et/ou la pièce de finition 19, qui sont toutes les deux également des pièces rigides. Par exemple, la pièce de garniture 17 pourra être réalisée en une résine thermoplastique ou thermodurcissable, ou en un matériau composite comprenant une matrice en résine thermoplastique ou thermodurcissable et un renfort en fibres. Le renfort en fibres peut comprendre des fibres de verre. La résine peut être sélectionnée dans le groupe comprenant les résines polypropylène, polyamide, polyphtalamide, polyétheréthercétone, polysulfure de phénylène, polyamide-imide, polyétherimide, polyarylamide, polyépoxyde, polyester insaturé, vinylester ou polyestervinylester.

Eventuellement, pour faciliter son maintien en extension depuis un de ses bords, la pièce de garniture 17 comprend une forme apte à l'assister. Par exemple, la pièce de garniture 17 se présente sous une forme de U ouvert vers le bas avec une paroi supérieure et deux ailes latérales.

Avantageusement, le bord avant 23 libre de la pièce de garniture 17 est reçu dans un logement 29 en forme de U ouvert en direction de l'arrière, comme illustré en figure 4, disposé au niveau du tableau de bord du véhicule. Ce logement 29 peut être formé par la pièce de finition 19 dont le profil montre un logement en forme de U destiné à être ouvert en direction de l'arrière du véhicule. De manière alternative dans un mode de réalisation non représenté, la pièce de finition se présente sous forme d'un cache colonne montrant un profil en L couché de manière à former un logement en U avec le tableau de bord dans lequel est inséré le bord avant de la pièce de garniture. Dans ce mode de réalisation, la paroi supérieure du logement est formée par le tableau de bord.

Idéalement, comme illustré en figure 4, le logement 29 en U destiné à recevoir le bord avant 23 libre montre un jeu entre ladite pièce de garniture 17 et chacune des parois inférieure 31 et supérieure 33 dudit logement 29 et/ou un jeu entre le bord avant 23 libre de la pièce de garniture 17 et le fond 35 du logement 29.

Ce jeu entre la partie de la pièce de garniture 17, comprenant son bord avant 23 libre, qui est insérée dans le logement 29 et chacune des parois inférieure 31 et supérieure 33 dudit logement 29 est de 12 à 15 mm par rapport à chaque face de la pièce de garniture 17 lorsqu'elle est en position centrale dans le logement 29, soit un jeu total de 24 à 30 mm. La présence de ce jeu permet un mouvement du sous-ensemble formé par l'association de la demi-gaine supérieure 15 et de la pièce de garniture 17 selon la direction verticale d'environ 10 mm dans chaque direction, et offre donc une possibilité de réglage de la position du volant de direction associé à la colonne de direction selon ses positions haute ou basse. L'homme du métier veillera à ce que dans les positions haute maximale ou basse maximale, la pièce de garniture 17 ne touche pas la pièce de finition 19 ou le tableau de bord afin de ne pas générer de bruits suite aux vibrations éventuelles de l'ensemble lors du roulage du véhicule, d'où la nécessité d'avoir un jeu supplémentaire d'environ 4 à 10 mm au total.

De même, la présence d'un jeu entre le bord avant 23 et le fond 35 du logement 29 est également de 12 à 15 mm lorsque la pièce de garniture 17 est en position centrale dans le logement 29. La présence de ce jeu permet un mouvement du sous-ensemble formé par l'association de la demi-gaine supérieure 15 et de la pièce de garniture 17 selon la direction longitudinale d'environ 10 mm, et offre donc une possibilité de réglage de la position du volant de direction associé à la colonne de direction selon ses positions avancée ou reculée. L'homme du métier veillera à ce que dans la position avancée maximale, la pièce de garniture 17 ne touche pas la pièce de finition 19 ou le tableau de bord afin de ne pas générer de bruits suite aux vibrations éventuelles de l'ensemble lors du roulage du véhicule, d'où la nécessité d'avoir un jeu supplémentaire de 2 à 5 mm. De même, il prendra soin que dans sa position reculée maximale, la pièce de garniture 17 reste insérée dans le logement 29 pour des raisons esthétiques et de qualité perçue par l'utilisateur.

La figure 5 illustre la position maximale haute et maximale reculée de la colonne de direction, par contraste avec la position normale centrée de la figure 4.

Comme vu plus haut en figure 3, la pièce de garniture 17 est reliée à la demi-gaine supérieure 15 par des moyens de fixation 27 fusibles. La fusibilité des moyens de fixation 27 peut être obtenue de différentes façons. Par exemple, les moyens de fixation 27 peuvent comprendre au moins un clip de fixation apte à se déclipper sous l'action d'une force supérieure à un seuil donné ; de préférence, au moins deux clips de fixation. Une autre possibilité consiste en l'emploi d'attaches aptes à se rompre sous l'action d'une force supérieure à un seuil donné, en particulier lorsque cette force est appliquée selon la direction longitudinale du véhicule. De telles attaches fusibles peuvent, par exemple, montrer une section avec un diamètre réduit formant une zone sécable.

On aura compris que l'emploi de moyens de fixation 27 fusibles permet de ne pas gêner la collapsibilité de la colonne de direction en cas de choc frontal. En effet, lorsque la colonne va s'enfoncer en direction du tableau de bord, le bord avant 23 de la pièce de garniture 17 va venir heurter le fond 35 du logement 29 et provoquer la séparation entre la pièce de garniture 17 et la demi-gaine supérieure 15 par décrochage ou rupture des moyens de fixation. La pièce de garniture 17 passe au-dessus de la demi-gaine supérieure 15 de manière à ce que les deux pièces se superposent sans gêner la course de la colonne de direction. Pour faciliter le dégagement de la pièce de garniture 17 par-dessus la demi-gaine supérieure 15, la pièce de garniture 17 est avantageusement fixée sur la face supérieure de la demi-gaine supérieure 15.

Par ailleurs, et de manière avantageuse, la colonne de direction comprenant en outre un volant de direction, la longueur de la pièce de garniture 17 telle que prise selon la direction longitudinale du véhicule est de préférence inférieure à la distance entre le fond 35 du logement 29 en U et le volant de direction lorsque la colonne de direction est à son maximum d'avancement en direction du tableau de bord, c'est-à-dire lorsque la colonne s'est déplacée en direction du tableau de bord en réponse à un choc frontal.

Pour des raisons de sécurité, il est préférable que lorsque la pièce de garniture 17 se décroche de la demi-gaine supérieure 15, celle-ci ne soit pas éjectée en direction du conducteur. Pour répondre à ce problème, l'invention propose de doter la pièce de garniture 17 d'une ancre 37 qui permet à la pièce de garniture 17 de rester accrochée à la demi-gaine supérieure 15 ou à la pièce de finition 19 tout en autorisant un mouvement relatif de la pièce de garniture 17 par rapport à la demi-gaine supérieure 15.

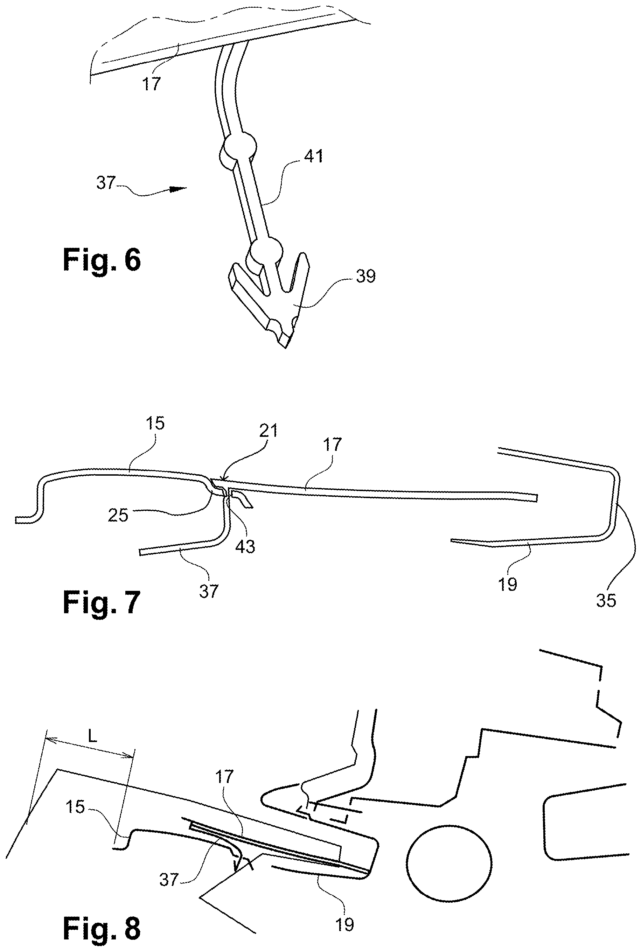

A cet effet, et de manière avantageuse comme illustré en figures 6 à 8, la pièce de garniture 17 comprend en outre une ancre 37 pour la retenir à la demi-gaine supérieure 15 et la demi-gaine supérieure 15 comprend en outre un moyen d'ancrage 43. Ce moyen d'ancrage 43 est idéalement situé au niveau du bord avant 25 de la demi-gaine supérieure 15 sur l'interface de fixation de la pièce de garniture 17. Ledit moyen d'ancrage 43 consiste en un ajour de taille inférieure à la taille de la tête 39 de l'ancre 37 une fois déployée. L'ancre 37 est quant à elle avantageusement reliée au bord arrière 21 de la pièce de garniture 17 et comprend une tête 39 d'ancrage montée au bout d'une tige 41 souple. La tête 39 se présente sous une forme de harpon apte à se replier sous la contrainte lors de sa mise en position par passage dans l'ajour de la demi-gaine supérieure 15. Une fois passé ledit ajour, la tête se déploie selon sa forme naturelle non contrainte et ne peut plus passer l'ajour en sens inverse. La longueur de la tige 41 est avantageusement supérieure ou égale à la distance L d'enfoncement de la colonne de direction vers le tableau de bord comme illustré en figure 8.

Ainsi, avantageusement, le procédé de montage d'un ensemble 13 formant une gaine d'habillage de colonne de direction selon l'invention est remarquable en ce qu'il comprend les étapes suivantes :
- ancrage de la pièce de garniture 17 sur la demi-gaine supérieure 15 ; et
- fixation de la pièce de garniture 17 sur la face supérieure de la demi-gaine supérieure 15, de préférence par clippage.

## Revendications

1. Ensemble (13) formant une gaine d'habillage de colonne de direction d'un véhicule automobile, l'ensemble (13) comprenant une demi-gaine supérieure (15), une pièce de finition (19), et une pièce de garniture (17) agencée pour s'étendre entre la demi-gaine supérieure (15) et la pièce de finition (19), et configurée pour être reliée à la demi-gaine supérieure (15) par des moyens de fixation (27) fusibles aptes à se rompre ou à se détacher sous l'application d'une force supérieure à un seuil donné, l'ensemble (13) étant destiné à être monté dans un véhicule comprenant un tableau de bord, la demi-gaine supérieure (15) comprenant un bord avant (25) et la pièce de garniture (17) comprenant un bord avant (23) et un bord arrière (21) lorsque l'ensemble est assemblé et monté dans le véhicule, **caractérisé en ce que** la pièce de finition (19) présente un logement (29) montrant un profil en U ouvert en direction de l'arrière du véhicule et dans lequel le bord avant (23) de la pièce de garniture (17) est inséré, ou **en ce que** la pièce de finition se présente sous forme d'un cache colonne montrant un profil en L couché de manière à former avec le tableau de bord un logement en U dans lequel est inséré le bord avant de la pièce de garniture

2. Ensemble (13) selon la revendication 1 **caractérisé en ce que** la pièce de garniture (17) est rigide ; de préférence, la pièce de garniture (17) est constituée en un matériau comprenant une résine thermoplastique et/ou thermodurcissable.

3. Ensemble (13) selon la revendication 1 ou 2 **caractérisé en ce que** le bord avant (23) de la pièce de garniture (17) est libre et/ou **en ce que** le bord arrière (21) de la pièce de garniture (17) est relié au bord avant (25) de la demi-gaine supérieure (15).

4. Ensemble (13) selon l'une des revendications de 1 à 3, le logement (29) en U destiné à recevoir le bord avant (23) de la pièce de garniture (17) comprenant un fond et des parois supérieure (33) et inférieure (31), l'ensemble (13) est **caractérisé en ce que** le logement (29) en U est dimensionné pour montrer un jeu entre ladite pièce de garniture (17) et les parois inférieure (31) et supérieure (33) dudit logement (29), lorsqu'elle est insérée dans le logement (29) ; et/ou un jeu entre le bord avant (23) de la pièce de garniture (17) et le fond du logement (29), lorsqu'elle est insérée dans le logement (29).

5. Ensemble (13) selon l'une des revendications 1 à 4, **caractérisé en ce que** les moyens de fixation (27) fusibles comprennent au moins un clip de fixation apte à se déclipper sous l'action d'une force supérieure à un seuil donné, et/ou au moins une attache montrant une zone sécable.

6. Ensemble (13) selon l'une des revendications 1 à 5, **caractérisé en ce que** la pièce de garniture (17) comprend en outre une ancre (37) pour la retenir à la demi-gaine supérieure (15) et la demi-gaine supérieure (15) comprend en outre un moyen d'ancrage (43) destiné à coopérer avec ladite ancre (37).

7. Véhicule automobile **caractérisé en ce qu'**il comprend un ensemble (13) formant une gaine d'habillage de colonne de direction selon l'une des revendications 1 à 6.

8. Véhicule suivant la revendication 7, comportant un ensemble (13) selon l'une des revendications 5 à 6, dont la colonne de direction comprenant en outre un volant de direction, **caractérisé en ce que** la longueur de la pièce de garniture (17) selon la direction longitudinale du véhicule est inférieure à la distance entre le fond (35) du logement (29) en U et le volant de direction lorsque la colonne de direction est à son maximum d'avancement en direction du tableau de bord ; et/ou la demi-gaine supérieure (15) montrant une face supérieure, la pièce de garniture (17) est fixée sur la face supérieure de la demi-gaine supérieure (15).

9. Procédé de montage d'un ensemble (13) formant une gaine d'habillage de colonne de direction selon l'une des revendications 1 à 6, la demi-gaine supérieure (15) montrant une face supérieure, le procédé étant **caractérisé en ce qu'**il comprend les étapes suivantes :
- ancrage de la pièce de garniture (17) sur la demi-gaine supérieure (15) ; et
- fixation de la pièce de garniture (17) sur la face supérieure de la demi-gaine supérieure (15), de préférence par clippage.

## Patentansprüche

1. Baugruppe (13), die einen Lenksäulenverkleidungsschlauch eines Kraftfahrzeugs bildet, wobei die Baugruppe (13) eine obere Halbschale (15), ein Endstück (19) und ein Verkleidungsteil (17) umfasst, das so angeordnet ist, dass es sich zwischen der oberen Halbschale (15) und dem Endstück (19) erstreckt, und so konfiguriert ist, dass es mit der oberen Halbschale (15) durch schmelzbare Befestigungsmittel (27) verbunden ist, die geeignet sind, unter Anwendung einer Kraft, die größer als ein bestimmter Schwellenwert ist, zu brechen oder sich zu lösen wobei die Baugruppe (13) zur Montage in einem Fahrzeug mit einem Armaturenbrett bestimmt ist, wobei die obere Halbschale (15) eine Vorderkante (25) aufweist und das Verkleidungsteil (17) eine Vorderkante (23) und eine Hinterkante (21) aufweist, wenn die Baugruppe zusammengebaut und in dem Fahrzeug montiert ist, **dadurch gekennzeichnet, dass** das Fertigteil (19) eine Aufnahme (29) aufweist, die ein U-Profil aufweist, das zur Rückseite des Fahrzeugs hin offen ist und in die die Vorderkante (23) des Verkleidungsteils (17) eingesetzt ist, oder Das Fertigteil ist eine Säulenabdeckung mit einem L-förmigen Profil, das so beschichtet ist, dass es mit dem Armaturenbrett eine U-förmige Aufnahme bildet, in die die Vorderkante des Verkleidungsteils eingesetzt ist

2. Anordnung (13) nach Anspruch 1, **dadurch gekennzeichnet, dass** das Verkleidungsteil (17) starr ist; Vorzugsweise besteht das Verkleidungsteil (17) aus einem Material, das ein thermoplastisches und/oder duroplastisches Harz umfasst.

3. Anordnung (13) nach Anspruch 1 oder 2, **dadurch gekennzeichnet, dass** die Vorderkante (23) des Verkleidungsteils (17) frei ist und/oder dass die Hinterkante (21) des Verkleidungsteils (17) mit der Vorderkante (25) der oberen Hülsenhälfte (15) verbunden ist.

4. Anordnung (13) nach einem der Ansprüche 1 bis 3, wobei das U-förmige Gehäuse (29) zur Aufnahme der Vorderkante (23) des Verkleidungsteils (17) einen Boden und eine obere (33) und eine untere (31) Wand aufweist, wobei die Anordnung (13) **dadurch gekennzeichnet ist, dass** das U-förmige Gehäuse (29) so dimensioniert ist, dass es ein Spiel zwischen dem Verkleidungsteil (17) und der unteren (31) und oberen (33) Wand des Gehäuses (29) zeigt, wenn es in das Gehäuse (29) eingeführt wird; und/oder ein Spiel zwischen der Vorderkante (23) des Verkleidungsteils (17) und dem Boden des Gehäuses (29), wenn es in das Gehäuse (29) eingesetzt ist.

5. Anordnung (13) nach einem der Ansprüche 1 bis 4, **dadurch gekennzeichnet, dass** die schmelzbaren Befestigungsmittel (27) mindestens einen Befestigungsclip umfassen, der sich unter der Wirkung einer Kraft, die größer als eine gegebene Schwelle ist, ausklinken kann, und/oder mindestens eine Klemme, die einen teilbaren Bereich zeigt.

6. Anordnung (13) nach einem der Ansprüche 1 bis 5, **dadurch gekennzeichnet, dass** das Verkleidungsteil (17) ferner einen Anker (37) zum Halten an der oberen Halbummantelung (15) aufweist und die obere Halbummantelung (15) ferner Verankerungsmittel (43) zum Zusammenwirken mit dem Anker (37) aufweist.

7. Kraftfahrzeug, **dadurch gekennzeichnet, dass** es eine Einheit (13) umfasst, die eine Lenksäulenverkleidungshülle nach einem der Ansprüche 1 bis 6 bildet.

8. Fahrzeug nach Anspruch 7, mit einer Anordnung (13) nach einem der Ansprüche 5 bis 6, deren Lenksäule ferner ein Lenkrad umfasst, **dadurch gekennzeichnet, dass** die Länge des Verkleidungsteils (17) in Fahrzeuglängsrichtung kleiner ist als der Abstand zwischen dem Boden (35) des U-förmigen Gehäuses (29) und dem Lenkrad, wenn die Lenksäule sich in Richtung des Armaturenbretts am weitesten bewegt; und/oder die obere Halbschale (15) eine Oberseite aufweist, ist das Verkleidungsteil (17) an der Oberseite der oberen Halbschale (15) befestigt.

9. Verfahren zur Montage einer Anordnung (13), die eine Lenksäulenverkleidungshülle nach einem der Ansprüche 1 bis 6 bildet, wobei die obere Halbhülle (15) eine Oberseite aufweist, wobei das Verfahren **dadurch gekennzeichnet ist, dass** es die folgenden Schritte umfasst:
- Verankerung des Verkleidungsteils (17) an der oberen Gehäusehälfte (15); und
- Befestigung des Verkleidungsteils (17) an der Oberseite der oberen Mantelhälfte (15), vorzugsweise durch Klipsen.

## Claims

1. An assembly (13) forming a steering column cover for a motor vehicle, the assembly (13) comprising an upper half cover (15), a finishing part (19), and a lining part (17) arranged to extend between the upper half cover (15) and the finishing part (19), and configured to be connected to the upper half cover (15) by fusible fastening means (27) capable of breaking or detaching under the application of a force greater than a given threshold, the assembly (13) being intended to be mounted in a vehicle comprising a dashboard, the upper half-sheath (15) comprising a front edge (25) and the trim part (17) comprising a front edge (23) and a rear edge (21) when the assembly is assembled and mounted in the vehicle, **characterized in that** the trim part (19) has a housing (29) showing a U-shaped profile open towards the rear of the vehicle and into which the front edge (23) of the trim part (17) is inserted, or **in that** the The finishing piece is in the form of a column cover showing an L-shaped profile which is laid down so as to form with the dashboard a U-shaped housing into which the front edge of the trim piece is inserted

2. Assembly (13) according to Claim 1, **characterized in that** the lining part (17) is rigid; preferably, the lining part (17) is made of a material comprising a thermoplastic and/or thermosetting resin.

3. Assembly (13) according to Claim 1 or 2, **characterized in that** the front edge (23) of the lining part (17) is free and/or **in that** the rear edge (21) of the lining part (17) is connected to the front edge (25) of the upper half-sheath (15).

4. Assembly (13) according to one of Claims 1 to 3, the U-shaped housing (29) intended to receive the front edge (23) of the lining part (17) comprising a bottom and upper (33) and lower (31) walls, the assembly (13) is **characterized in that** the U-shaped housing (29) is dimensioned to show a clearance between said lining part (17) and the lower (31) and upper (33) walls of said housing (29), when it is inserted into the housing (29); and/or a clearance between the front edge (23) of the lining part (17) and the bottom of the housing (29) when inserted into the housing (29).

5. Assembly (13) according to one of Claims 1 to 4, **characterized in that** the fusible fastening means (27) comprise at least one fastening clip capable of distracting under the action of a force greater than a given threshold, and/or at least one fastener showing a breakable zone.

6. Assembly (13) according to one of Claims 1 to 5, **characterized in that** the lining part (17) further comprises an anchor (37) for retaining it at the upper half-sheath (15) and the upper half-sheath (15) further comprises anchoring means (43) intended to cooperate with said anchor (37).

7. Motor vehicle **characterized in that** it comprises an assembly (13) forming a steering column covering according to one of Claims 1 to 6.

8. A vehicle according to claim 7, comprising an assembly (13) according to one of claims 5 to 6, the steering column of which further comprises a steering wheel, **characterized in that** the length of the lining part (17) in the longitudinal direction of the vehicle is less than the distance between the bottom (35) of the U-shaped housing (29) and the steering wheel when the steering column is at its maximum advance in the direction of the instrument panel; and/or the upper half-sheath (15) having an upper face, the lining part (17) is fixed to the upper face of the upper half-sheath (15).

9. A method of mounting a steering column cover assembly (13) according to one of claims 1 to 6, the upper half-cover (15) having an upper face, the method being **characterized in that** it comprises the following steps:
- anchoring of the lining part (17) to the upper half-sheath (15); and
- fixing of the lining part (17) to the upper face of the upper half-sheath (15), preferably by clipping.
